Europäisches Patentamt

European Patent Office

Office européen des brevets

(19)

(11) Publication number: **0 082 008**
**A1**

(12) # EUROPEAN PATENT APPLICATION

(21) Application number: **82306644.4**

(22) Date of filing: **13.12.82**

(51) Int. Cl.³: **B 21 D 53/80, F 16 K 17/16**

(30) Priority: **15.12.81 US 330809**

(43) Date of publication of application: **22.06.83**
**Bulletin 83/25**

(84) Designated Contracting States: **DE FR GB**

(71) Applicant: **BS & B SAFETY SYSTEMS, INC., Tulsa**
**Oklahoma (US)**

(72) Inventor: **Allen, Jerome D., 5026 S.92nd East Avenue,**
**Tulsa Oklahoma 74145 (US)**
Inventor: **Short, Edward H., 5818 S. Pittsburgh, Tulsa**
**Oklahoma 74135 (US)**
Inventor: **Wood, Loren E., (deceased) (US)**

(74) Representative: **Senior, Alan Murray et al, J.A. KEMP &**
**CO 14 South Square Gray's Inn, London WC1R 5EU (GB)**

(54) **Scored reverse buckling rupture disc.**

(57) A method of manufacturing a scored reverse buckling rupture disc (16) of desired reversal rupture pressure including the steps of forming a concave-convex dome (20) in a sheet of metal, selecting the depth and the variation in depth in a direction towards the periphery of the dome of scores (24) to be formed in a surface of the dome, adjusting score forming means according to said selctions and forming the scores on a surface of said dome thereby creating lines of weakness therein, said scores extending outwardly from a central portion of the dome towards the periphery.

Apparatus of the invention can include an anvil cooperating with a curved edged blade in such a way that they are relatively movable, by rotational or longitudinal movement, so that the variation in depth of the grooves from the centre outwardly can be altered.

- 1 -

DESCRIPTION

SCORED REVERSE BUCKLING RUPTURE DISC

The present invention relates generally to methods of and apparatus for manufacturing scored reverse buckling rupture discs.

Safety pressure relief devices of the rupture disc type include a rupture disc supported between a pair of supporting members or flanges which are connected to a vessel or system containing fluid pressure. When the pressure exceeds the design rupture pressure of the disc, rupture occurs causing excess fluid pressure to be relieved.

Assemblies of rupture discs of the reverse buckling type can include a reverse buckling concave-convex rupture disc with a set of knife blades positioned adjacent the disc on the downstream side to cause the disc to open when it reverses itself. Other assemblies include scores or grooves on a surface of the concave-convex portion of the disc, creating lines of weakness, along which the disc tears, without fragmentation, upon reversal. A method of manufacturing such discs is described in United States Patent No. 3,921,556, such method involving, in addition to the scoring step, a number of reforming and annealing steps, such steps being varied according to the desired operational characteristics of the discs being made. The reforming and annealing steps are time consuming, complicated and on occasion liable to unwanted variation unless great care is taken.

We have now found that an easier and more precise way of controlling the rupture pressure is to adjust the variation in depth of the scores or grooves in a direction from the disc centre towards its periphery. Such an adjustment has not been proposed hitherto and is not possible with existing apparatus.

According to the present invention there is provided a method of manufacturing a scored reverse buckling rupture disc of desired reversal rupture pressure, including the steps of forming a concave-convex dome in a sheet of metal, selecting the depth and the variation in depth in a direction towards the periphery of the dome of scores to be formed in a surface of the dome, adjusting score forming means according to said selections and forming the scores on a surface of said dome thereby creating lines of weakness therein, said scores extending outwardly from a central portion of the dome towards the periphery.

The present invention also provides apparatus for use in manufacturing scored reverse buckling rupture discs of desired reversal rupture pressure including an anvil having a curved recess to receive the convex side of a concave-convex dome portion of a disc, a score blade

- 3 -

having a convexly curved leading edge to form one or more scores on the concave side of the dome portion when received in the anvil, means for relatively moving the blade and anvil so that the blade will press into a disc supported on the anvil, and the anvil and blade being additionally relatively movable such that the plane of the blade moves relative to the anvil whereby the curvature of the cross section of the anvil surface in the plane of the blade can be selected, such that in use the scores to be made by the blade can be adjusted as to variation in depth from the centre of the dome outwardly. The facility for and procedure of selection of the variation of depth of the scores outwards towards the periphery allows much easier and better control of rupture strength. Moreover, it reduces and in some instances eliminates the reforming and annealing steps previously required. In addition, improved operational characteristics are noted.

There are two main ways in which in apparatus of the invention the adjustment of depth variation can be made. In one, the anvil has a recess of varying curvature. It can be moved relative to the blade in a direction parallel to the axis of its curvature, so that the blade comes opposite areas of greater or lesser curvature. In the other, the anvil has constant curvature and the blade is rotated about an axis perpendicular to the anvil surface.

It is a preferred feature of the invention that it provides scored reverse buckling rupture discs which reverse from the centre outwards and preferably also rupture in tension at a pressure no greater than 1.5 times their reversal rupture pressure.

The invention will be more clearly understood from the following description which is given by way of example only with reference to the accompanying drawings in which:-

Figure 1 is a sectional view of a safety pressure relief device including a scored reverse buckling rupture disc;

Figure 2 is a top plan view of the disc shown in Figure 1;

Figure 3 is a side view, partially in section, of a score blade and anvil of apparatus of the present invention;

Figure 4 is an enlarged top view of one form of anvil;

Figure 5 is a side view of the anvil of Figure 4;

Figure 6 is a top view of an alternative form of anvil; and

Figure 7 is a side view of the anvil of Figure 6.

- 5 -

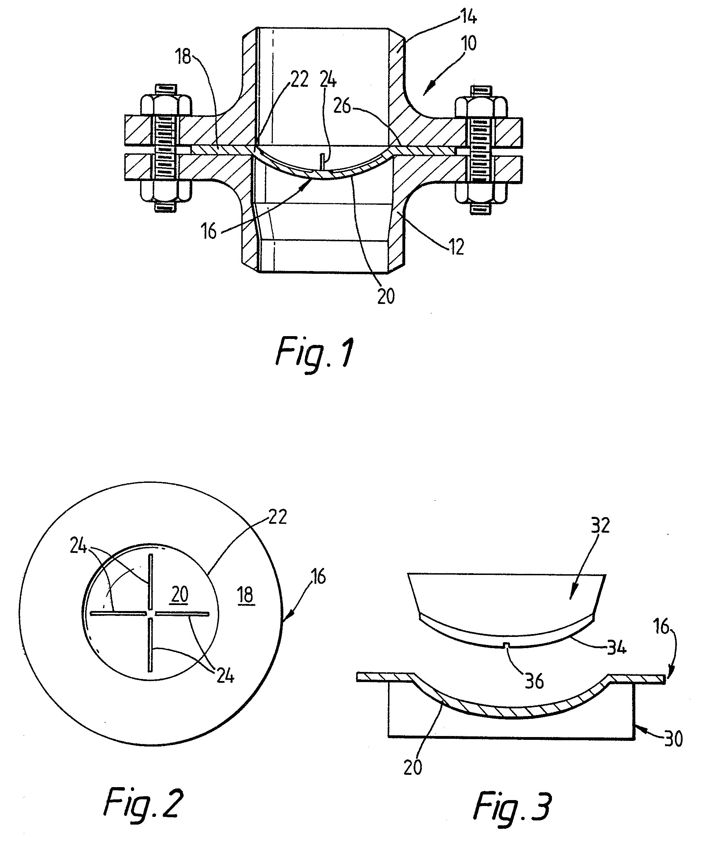

Referring now to the drawings and particularly to Figures 1 and 2, a safety pressure relief device 10 includes inlet and outlet flange-type supporting members 12 and 14 with a scored reverse buckling rupture disc 16 clamped therebetween. The supporting members 12 and 14 can take other forms, e.g. they can include special cylindrical supporting members which may be clamped between conventional pipe flanges. The inlet supporting member 12 is sealingly communicated with a vessel or system to be protected so that fluid pressure exerted within the vessel or system is applied to the convex side of the rupture disc 16. The outlet supporting member 14 can be connected to a system for disposing of fluids released through the device 10 or can be left open to the atmosphere.

A preferred form of the disc 16 includes a flat annular flange portion 18 connected to a concave-convex dome portion 20 by a transition connection 22. A plurality of (in this case four) grooves 24, referred to in the art as "scores", are disposed in the concave side of the concave-convex dome portion 20 creating lines of weakness, which radiate outwardly from the central portion of the concave-convex dome portion 20 towards the periphery thereof. In certain instances the annular flat flange portion 18 can be omitted and the entire disc 16 can be formed of concave-convex dome shape. Further, the

- 6 -

scores 24 can be disposed in the disc 16 on either the concave or the convex surface, and more or less than four scores can be utilised. In a presently preferred embodiment, however, there are four scores dividing the dome into quadrants and extending outwardly from points near the top of the dome.

In use, when the fluid pressure exerted on the convex side of the disc 16 exceeds its reversal rupture pressure, the dome portion 20 reverses and tears along the lines of weakness created by the scores 24. The disc thus opens in a four-petal configuration.

To make a group of discs, a metal sheet is first divided into a plurality of sections, concave-convex domes are formed in each, and identical scores of a predetermined depth are made in a surface of each dome. In the score-forming step, the rupture disc 16 is placed with its convex side in a curved recess on a score anvil 30 (Figure 3), which cooperates with a score blade 32 having a curved leading edge 34 for forming one or more scores on the concave side of the dome portion 20. By means not shown, the blade can be urged towards the anvil 30 to contact and score, to a known depth, the disc 16 thereon. The recess in the anvil 30 is shaped such that the depth variance of the scores, that is the extent to which the score depth varies from the centre of the disc outwardly, can be selected. The score blade 32 has a curved edge 34 lying in a single plane and with a central notch 36. When the score blade 32 contacts the rupture disc 16, two scores 24 are formed in the dome portion 20 extending in opposite directions from the centre. Then the disc 16 is rotated 90° and two further scores 24 are formed therein to produce the score configuration illustrated in Figure 2.

The actual depth of the scores 24 is controlled by controlling the force at which the score blade 32 contacts the disc 16 and the score anvil 30. The scores 24 are generally formed so that each has a greater depth at the centre of the disc 16 than near its periphery. Because of this depth variance, the discs have less resistance to reversal at the centre portions thereof than at the periphery, and they reverse from the centre outwardly which ensures full opening of the disc 16 upon reversal. By controlling the depth variance of the scores 24, i.e. the variation in depth from the centre towards the periphery, discs can be produced without the annealing and reforming steps heretofore required or at least with fewer such steps. The scored rupture discs produced can have constant reversal rupture pressures and have a ratio of tension rupture pressure to reversal rupture pressure equal to or less than 1.5.

Herein, "tension rupture pressure" means the fluid pressure exerted on the concave side of the dome of a scored disc required to cause the disc to rupture; "reversal rupture pressure" means the fluid pressure exerted on the convex side of the dome of a scored disc required to cause the dome to reverse itself and tear along the scored lines of weakness; "unscored tension rupture pressure" means the fluid pressure exerted on the concave side of the dome of a disc which has not been scored required to cause the dome to rupture; and "crown height" means the distance from the apex of the dome portion to the horizontal plane of peripheral portions of the disc.

A preferred method of manufacturing a group of scored reverse buckling rupture discs having a known reversal rupture pressure and a ratio of tension rupture pressure to reversal rupture pressure equal to or less than 1.5 from sheet metal is as follows. The sheet metal is divided into a plurality of circular sections of a diameter appropriate to intended use. The sections are then each clamped between a pair of conventional supporting members for forming concave-convex dome portions therein connected to a source of pressurised fluid, such as pressurised air. A concave-convex dome portion is formed in each of the sections by applying fluid pressure on one side thereof at a level exceeding the yield point of the metal from which the sections are formed. The initial forming step is controlled so that the concave-convex dome formed in each of the sections has a crown height

- 9 -

substantially equal to 13% of the diameter of the disc. This crown height is commonly known in the art as a 40% crown height, meaning that the disc is bulged using a fluid pressure equal to 40% of the fluid pressure required to cause the disc to burst or rupture, i.e., 40% of the unscored tension rupture pressure. After each of the discs is initially formed in the manner described above, scores having a known depth and having a known depth variance are formed in the domes.

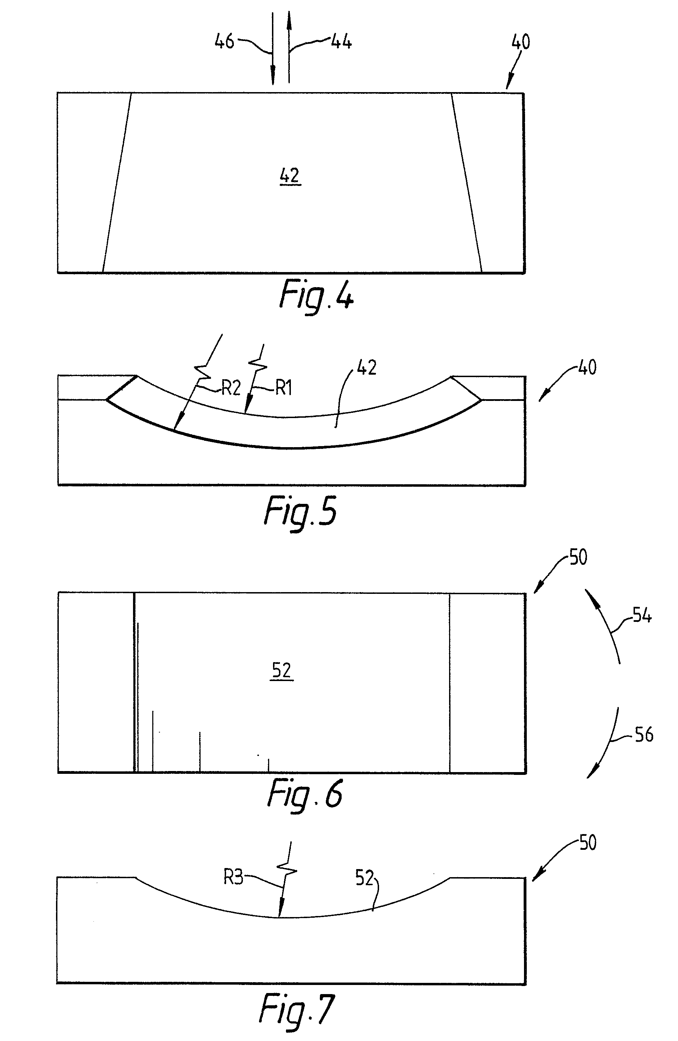

Figures 4 and 5 show one form of score anvil 40 which can be used, and which includes a curved recess 42 for receiving the convex side of the concave-convex dome portion of a rupture disc to be scored. A score blade (not shown) is utilised with the anvil 40, this having a radius of curvature substantially corresponding to the radius of curvature of the concave-convex dome portions of discs formed to a 40% crown height as described above. Rupture discs are manufactured in standard sizes and a score blade and score anvil can be provided for each standard size.

The recess 42 of the anvil 40 has the shape of a longitudinal segment of a right circular truncated cone. The radius of curvature of the recess 42 at its narrow end, designated $R_1$ in Figure 5, is made equal to the radius of curvature of the leading edge of the score blade, and substantially corresponds to the radius of curvature of the concave-convex dome portion of a rupture disc formed to a 40% crown height. However, the radius of curvature of the recess 42 at the other end, designated $R_2$ in Figure 5, is substantially larger. As a result, between the ends of the recess 42 are an infinite number of positions with various radii of curvature. A conventional press is attached to the anvil 40 and the score blade so that the score blade can be brought into contact with the dome portion of a rupture disc positioned on the anvil 40. The depth of scores formed is controlled by controlling the force utilised. As to the depth variance of the scores, if it is desired that the scores be of uniform depth from the central portion of the dome portion towards its periphery, the narrow end of the recess 42 of the anvil 40 is aligned with the score blade, and the concave side of the dome portion to be scored is held in a position wherein the score blade will contact it at the region of radius $R_1$. Thus, a surface having the same radius of curvature as the score blade is positioned directly under the line of contact of the score blade with the rupture disc. This gives scores of equal depth from the centre to the periphery. If it is desired to provide scores which are slightly deeper at the centre than at the periphery, the anvil 40 is moved in the direction of the arrow 44 in Figure 4 relative to the score blade and rupture disc. Then, the curved surface Since, under applicable pressure vessel piping codes the test pressure of pressure vessels and systems is set at 1.5 times the design pressure, it is desirable for scored reverse buckling rupture discs to have a reversal rupture pressure close to the design rupture pressure and a tension rupture pressure no higher than 1.5 times the reversal rupture pressure. This ensures that if such discs reverse without rupturing, for instance due to the discs being damaged during installation, rupture will ultimately occur before the pressure level within the vessel or system exceeds the test pressure.

If the discs made as described do not have the desired reversal rupture pressure, a second group of the discs can be scored using a different score depth and/or a different score depth variance. Generally, it is desirable that all of the scored reverse buckling rupture discs manufactured have a score depth at the centre at least slightly greater than that at the periphery so that the discs will have less resistance to reversal at the centre. When the reversal process of a reverse buckling scored rupture disc takes place at the centre of the dome portion towards the periphery thereof, better operational results are achieved, in that the discs reliably tear along the lines of weakness created by the scores and open fully.

Once the particular depth and depth variance of scores which produce the desired reversal rupture pressure are determined by trial and error, and if the ratio of tension rupture pressure to reversal rupture pressure is equal to or less than 1.5, then additional discs are scored using such score depth and depth variance. It has been found that by varying the score depth and depth variance, discs formed of certain materials such as aluminium can be manufactured without the need to reform and anneal. However, in other instances, depending upon the metal and thickness, a desired reversal rupture pressure can be obtained, but the ratio of tension rupture pressure to reversal rupture pressure may be above 1.5. The ratio can be lowered without appreciably affecting the reversal rupture pressure by reforming the dome portions of the discs after scoring followed by annealing. In the reforming step, the discs are again clamped into the dome-forming supporting members and fluid pressure is applied on the concave sides to a level below the tension rupture pressure, so that the dome portions are reformed, i.e., the crown heights increased. Preferably, the fluid pressure applied in the reforming step is equal to from about 85% to about 95% of the tension rupture pressure of the discs. The reformed discs are then annealed to relieve stresses therein. In the annealing step, the discs are preferably heated to from about 1500°F (820°C) to about 2000°F 1100°C) for, for instance, 2 to 5 minutes. The stresses

0082008

- 11 -

beneath the concave-convex dome portion of the rupture disc is of slightly greater radius of curvature than the radius of curvature of the score blade. The anvil 40 can be moved in the direction of arrow 44 to a position where the larger end $R_2$ of the recess 42 is beneath the rupture disc and score blade. This allows scores which have a considerable depth variance from the centre outwardly.

Means for moving the anvil 40 as indicated by the arrows 44 and 46 can be attached to the anvil 40 and include a graduated indicator so that particular positions of the anvil 40 can be noted and recorded.

Figures 6 and 7 show another anvil 50 similar to the anvil 40 but with a curved recess 52 having a shape corresponding to a longitudinal segment of a right cylinder of circular cross section. The radius of curvature of the recess 52, designated $R_3$ in Figure 7, is equal to the radius of curvature of the score blade (not shown). In operation, the anvil 50 is used in the same manner as the anvil 40 except that it is pivotable about a central vertical axis, so that it can be moved relative to the score blade in the directions indicated by the arrows 54 and 56 of Figure 6. When the long axis of the anvil 50, which is parallel to the axis of the cylinder of which the recess 52 is a part, is parallel to the score blade, scores are formed in the dome of a rupture disc positioned on the anvil 50 which have equal depth from the centre outwards. However, when the anvil
50 is rotated as indicated by the arrows 54 and 56, the
radius of curvature of the surface of the recess 52 at the
line of contact of the score blade is increased. Thus,
by rotating the anvil 50, the scores formed on a rupture
disc can be made deeper at the centre than at the
periphery. Further, the variation in depth can be
accurately controlled and reproduced. Like the anvil 40,
the anvil 50 can have mechanical means including a
graduated index whereby particular positions relative to
the score blade can be readily reproduced.

After a group of metal discs has been scored,
one or more of the discs are again clamped into the dome-
forming supporting members and increasing fluid pressure
is applied on the concave side until the dome portions
rupture, thereby determining the tension rupture pressure
of the discs. Then, one or more of the discs are clamped
into the dome-forming supporting members and increasing
fluid pressure is applied on the opposite, convex, side
until the dome portions reverse and rupture, thus
determining the reversal rupture pressure of the discs.

In order to ensure that the discs have a tension
rupture pressure such that if the discs reverse but do not
open excessive pressure will not be required to rupture
the discs in tension, the ratio of tension rupture pressure
to reversal rupture pressure is preferably 1.5 or less.

- 15 -

set up in the discs are relieved, but the grain structure of the metal is not changed significantly.

The reforming and annealing steps may also have to be carried out on discs which will be subjected to fluid pressure from both sides. For example, scored reverse buckling rupture discs are often utilised to isolate relief valves, for instance in a method where the relief valve can be tested by exerting fluid pressure between the concave side of the rupture disc and the relief valve without rupturing the disc. However, when such pressure is exerted on the concave side of scored reverse buckling rupture discs which have not been reformed and annealed, the reversal rupture pressure can be changed due to the stresses set up in the concave-convex dome portions of the discs. Consequently, scored reverse buckling rupture discs to be used in this and other similar applications are best reformed and annealed as a part of the manufacturing procedure to minimize changes in the reversal rupture pressure.

Factors affecting the tension and reversal rupture pressure characteristics of scored discs include disc size, metal thickness, the nature of the metal, the crown height, the score depth and depth variance and the configuration of the scores. In providing discs of desired reversal rupture pressure and with a ratio of tension rupture pressure to reversal rupture pressure

- 16 -

equal to or less than 1.5, trial and error techniques are initially employed to determine the thickness of the metal and the depth and depth variance of the scores. Thus, sections of sheet metal can be cut, placed into the dome-forming supporting members, and pressurised until rupture occurs so that the unscored tension rupture pressures for various thicknesses of sheet metal can be determined. From this information sheet metal thickness can be selected, having an unscored tension rupture pressure approximately 1.15 to 5 times the desired reversal pressure of the discs to be made. Dome portions can be formed in the discs to a 40% crown height and a group of the sections scored to a known depth and a known depth variance, such that the tension rupture pressure of the scored discs is in the range of from about 20% to about 45% of the unscored tension rupture pressure. The tension rupture pressure and reversal rupture pressure of the discs are next determined by applying increasing fluid pressure on the respective sides. If the reversal rupture pressure is too high or too low, and/or if the ratio of tension rupture pressure to reversal rupture pressure of the discs is too high, a second group of discs can be scored to a different depth and/or depth variance, and the tension rupture pressure and reversal rupture pressure again determined. This trial and error technique can be continued until the desired reversal rupture pressure is achieved together with

0082008

- 17 -

a ratio of tension rupture pressure to reversal rupture pressure equal to or less than 1.5.

As mentioned above, in some instances depending for instance upon the particular metal used and the thickness of the discs, the desired reversal rupture pressure is achieved by varying the depth and depth variance of the scores, but a ratio of tension rupture pressure to reversal rupture pressure of 1.5 or less cannot be obtained without the additional steps of reforming and annealing. But even in such cases, the ability to control the depth variance of the scores improves the operational characteristics as well as the manufacture of the discs. The discs made by the methods of the invention can achieve full opening in lower pressure applications more dependably than known discs. At least one and sometimes each annealing step is eliminated. The apparatus for forming the scores allows accurate control of the depth variance of the scores, and is more economical in use than scoring apparatus utilised heretofore.

- 18 -

CLAIMS

1. A method of manufacturing a scored reverse buckling rupture disc of desired reversal rupture pressure by forming a concave-convex dome in a sheet of metal, and characterised by the steps of selecting the depth and the variation in depth in a direction towards the periphery of the dome of scores to be formed in a surface of the dome, adjusting score forming means according to said selections and forming the scores on a surface of said dome thereby creating lines of weakness therein, said scores extending outwardly from a central portion of the dome towards the periphery.

2. A method as claimed in claim 1, characterised in that said scores are made deeper at central portions of said dome than at the periphery thereof.

3. A method as claimed in claim 1 or 2, characterised by the further steps of reforming said scored dome portion of said section to increase the crown height thereof and annealing said section to relieve stresses therein.

4. A method as claimed in any preceding claim, characterised in that a group of discs are formed from sections of a sheet of metal.

5. A method as claimed in claim 4, characterised in that: increasing fluid pressure is applied on the concave side of said dome portions of one or more of a first group until said dome portion ruptures, thereby determining the tension rupture pressure of said scored sections; increasing fluid pressure is applied on the convex side of the dome portions of one or more of said first group until said dome portion reverses itself and ruptures, thereby determining the reversal rupture pressure of said sections; and characterised in that the steps of forming scores and applying said pressures are repeated, on further groups employing different depths and/or depth variances for the scores, until a desired reversal rupture pressure is obtained and the ratio of tension rupture pressure to said reversal rupture pressure is equal to or less than 1.5, so that the steps of forming scores can be performed on still further groups of metal sections using the depth and depth variance so discovered as appropriate.

6. A method as claimed in claim 5, characterised in that, subsequent to the step of determining the tension rupture pressure in respect of each group, the step is taken of applying fluid pressure on the concave side of the domes of other sections of the group at a level in the range of from about 85% to about 95% of said tension rupture pressure and annealing said scored sheet metal sections to relieve stresses therein.

7. A method as claimed in claim 6, characterised in that the annealing of said sheet metal sections involves

0082008

- 20 -

heating said sheet metal sections to a temperature in the range of from about 1500°F (820°C) to about 2000°F (1100°C) for a period of from about 2 minutes to about 5 minutes.

8. Apparatus for use in manufacturing scored reverse buckling rupture discs of desired reversal rupture pressure, such apparatus being characterised by an anvil (30,40,50) having a curved recess (42,52) to receive the convex side of a concave-convex dome portion of a disc (16), a score blade (32) having a convexly curved leading edge (34) to form one or more scores on the concave side of the dome portion (16) when received in the anvil, means for relatively moving the blade and anvil so that the blade will press into a disc supported on the anvil, and the anvil and blade being additionally relatively movable (arrows 44,46,54,56) such that the plane of the blade moves relative to the anvil whereby the curvature of the cross section of the anvil surface in the plane of the blade can be selected, such that in use the scores to be made by the blade can be adjusted as to variation in depth from the centre of the dome outwardly.

9. Apparatus as claimed in claim 8, characterised in that said curved leading edge (34) of the score blade (32) is shaped to inscribe two scores (24) extending in opposite directions from the centre portion of the dome portion of said disc towards the periphery thereof.

10. Apparatus as claimed in claim 8 or 9, characterised in that the curved recess (52) in the anvil has the shape of a longitudinal segment of a right cylinder, the radius of curvature of said curved recess being equal to the radius of curvature of said curved leading edge of said score blade, and including means for rotating said score anvil relative to said curved leading edge of said score blade.

11. Apparatus as claimed in claim 8 or claim 9, characterised in that the curved recess (42) in the anvil has the shape of a longitudinal segment of a right circular truncated cone, the radius of curvature of said curved recess at one position therein being equal to the radius of curvature of said curved leading edge of said score blade, the radius of curvature of the curved recess at other positions being greater than that of the leading edge of the score blade, and including means for moving said anvil relative to said curved leading edge of said score blade.

Fig.1

Fig.2

Fig.3

0082008

46 —| |— 44

40

42

*Fig.4*

R2 R1 42

40

*Fig.5*

50

54

52

56

*Fig.6*

R3 52

50

*Fig.7*

**European Patent Office**

**EUROPEAN SEARCH REPORT**

Application number

EP 82 30 6644

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y | US-A-3 921 556 (WOOD et al.) <br> * Claims 1-9; figures 1, 2, 4 * | 1,2 | B 21 D 53/80 <br> F 16 K 17/16 |
| A | | 6 | |
| Y | DE-A-2 359 382 (BLACK, SIVALLS & BRYSON) <br> * Claims 1, 2; figures 1, 2 * | 1,2 | |
| Y | US-A-3 484 817 (WOOD) <br> * Claims 1-4; figure 2 * | 1,2 | |
| A | DE-A-2 835 221 (BLACK, SIVALLS & BRYSON) | | |
| A | FR-A-2 095 541 (INTERTHERM) | | TECHNICAL FIELDS SEARCHED (Int. Cl. 3) <br><br> B 21 D 17/00 <br> B 21 D 22/00 <br> B 21 D 51/00 <br> B 21 D 53/00 <br> F 16 K 17/00 |

The present search report has been drawn up for all claims

| Place of search <br> BERLIN | Date of completion of the search <br> 14-02-1983 | Examiner <br> SCHLAITZ J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82